# EUROPÄISCHE PATENTANMELDUNG

(11) **EP 1 227 692 A1**
(43) Veröffentlichungstag der Anmeldung: **31.07.2002**
(21) Anmeldenummer: 01101728.2
(22) Anmeldetag: 25.01.2001
(51) Int. Cl.: H04Q 7/38

(54) **Verfahren zur Übergabe von funkbasierten Datenverbindungen mit Qualitätsmerkmalen zwischen Funkbasisstationen**

(71) Anmelder: SIEMENS AKTIENGESELLSCHAFT, 80333 München (DE)
(72) Erfinder: Morper, Hans-Jochen, 85253 Erdweg (DE)

(57) **Zusammenfassung**

Die Erfindung bezieht sich auf ein Verfahren zur Verwaltung von funkbasierten Datenverbindungen mit individuellen Qualitätsanforderungen (QoS) zwischen funkbasierten Netzeinrichtungen (RBS, RNT; RBS1, RBS2, RNT1, RNT2, RNT3) unter Berücksichtigung entsprechender Qualitätsanforderungen. Das Verfahren wird in einem Datenübertragungs-System angewendet, das zumindest eine funkbasierte Netzzugangseinrichtung (RBS; RBS1, RBS2) und zumindest eine funkbasierte Teilnehmereinrichtung (RNT; RNT1, RNT2, RNT3) aufweist, die über eine Funkschnittstelle (V) miteinander kommunizieren, wobei die Funkschnittstelle (V) ein gemeinsam genutztes Medium ("shared medium") darstellt, in welchem jedes einer Vielzahl von Datenendgeräten (H, W-H), welches mit einer Teilnehmerendeinrichtung (RNT) verbunden ist, jedes Datenpaket, das über diese Funkschnittstelle (V) von der zumindest einen funkbasierten Netzzugangseinrichtung (RBS) gesendet wird, empfangen kann.

Zur verbesserten Verwaltung der Ressourcen wird insbesondere für eine Verbindungsübergabe (Handover) vorgeschlagen, Ressourcenbestandsanforderungen und/oder Ressourcenverbrauch und/oder freie Ressourcen des Gesamtdatenstroms, über die Funkschnittstelle (V) zwischen zumindest einer Teilnehmerendeinrichtung (RNT; RNT1, RNT2, RNT3) und der damit kommunizierenden Netzzugangseinrichtung (RBS; RBS1, RBS2) durch einen oder mehrere Parameter zu bestimmen.

## Beschreibung

Verfahren zur Übergabe von funkbasierten Datenverbindungen mit Qualitätsmerkmalen zwischen Funkbasisstationen

Die Erfindung bezieht sich auf ein Verfahren zur Verwaltung funkbasierter Datenverbindungen mit Qualitätsmerkmalen gemäß den oberbegrifflichen Merkmalen des Patentanspruchs 1 sowie auf ein Datenübertragungs-System zum Durchführen eines solchen Verfahrens.

In leitungsgebundenen Kommunikationssystemen findet eine Kommunikation zwischen miteinander verdrahteten Teilnehmerstationen statt, wobei zwischen diesen in der Regel Vermittlungsstellen zwischengeschaltet sind.

In Funk-Kommunikationssystemen, beispielsweise dem Mobilfunksystem GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle dient als eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration UMTS sind zwei Modi vorgesehen, wobei ein Modus einen FDD-Betrieb (Frequency Division Duplex) und der andere Modus einen TDD-Betrieb (Time Division Duplex) zugrunde legt. Diese Modi finden ihre Anwendung in unterschiedlichen Frequenzbändern, wobei beide Modi ein kodegeteiltes sogenanntes CDMA-Teilnehmer-Separierungsverfahren (Code Division Multiple Access) unterstützen.

Im Falle eines Datenzugangs, vor allem in leitungsgebundenen Systemen, erfolgt die Steuerung von Verbindungen zwischen einer Teilnehmerstation und einem Zugangsnetz zumeist über ein Punkt-zu-Punkt-Protokoll (PPP). Beim Aufbau einer Verbindung findet eine Authentisierung des Teilnehmers bzw. der Verbindungs-aufbauenden Teilnehmer-Station statt, was u.a. Grundlage für eine zentrale Abrechnung von anfallenden Gebühren sein kann. Zu Zwecken der Authentisierung ist das RADIUS-Protokoll (RADIUS: Remote Authentication Dial In User Service) bekannt.

Bieten derartige Kommunikationssysteme den Teilnehmerstationen, z.B. einem Computer bzw. Host, einen Netzzugang für Datenübertragung, z.B. für Internetdienste, an, so erfolgt bei der Installation einer Teilnehmerstation eine Konfiguration, bei der in der Teilnehmerstation alle für den Datenzugang notwendigen Einstellungen, insbesondere IP-Adressen (IP: Internet Protokoll) abgespeichert werden. Diese erlauben es der Teilnehmerstation, respektive dem Teilnehmer, unterstützende Dienste, die für den Ablauf des gewünschten Datendienstes, z.B. Internet-Zugang, unumgänglich sind, sowie Netzkomponenten, auf denen diese ablaufen, zu kontaktieren. Zu diesen Adressen gehören neben z.B. der IP-Adresse eines HTTP-Servers, der den bequemen Aufruf einer Internetseite "per Mausklick" ermöglicht, u.a. die Adresse eines DNS (Domain Name Server), welcher die zu einem Teilnehmer gehörende IP-Adresse ermittelt, sowie die Adresse eines SMTP-Servers (Simple Mail Transfer Protocol), welcher zur Übermittlung elektronischer Nachrichten, bekannt als E-mail, notwendig ist.

Neben den vorstehend aufgeführten Kommunikationssystemen gibt es Datennetze, die in der Regel lokal aufgebaut sind und zur allgemeinen Verbindung von Datenstationen konzipiert sind, die nachfolgend lediglich zur Unterscheidung von den vorstehend bezeichneten Teilnehmerstationen und ohne Beschränkungen als Host bezeichnet werden. Zwei Host-Rechner können direkt oder über Hubs und Brücken miteinander und mit Netzeinrichtungen wie einem Zugriffsserver, verbunden sein. Der Transport von Datenpaketen zwischen einem Host und einer anderen Netzeinrichtung erfolgt zumeist über IP (Internet-Protokoll).

Beim Anschluß eines Host an ein Netz, beispielsweise ein lokales Datennetz (LAN - Local Area Network), wird dem Host von einem Verbindungs- bzw. Zugriffsserver mittels z.B. des sogenannten dynamischen Host-Konfigurierungs-Protokolls (DHCP) eine IP-Adresse vergeben, unter welcher der Host im Netz eindeutig identifizierbar und ansprechbar ist. Außerdem werden dem Host dabei Adressen von für ihn wichtigen Hilfsdiensten bzw. von Netzkomponenten, auf denen diese Dienste ausgeführt werden, in diesem Netz mitgeteilt.

Ein Host ist üblicherweise drahtgebunden an ein lokales Netz angeschlossen, wobei das letzte Teilstück eines drahtbasierten Zugangs in neueren Netzen drahtlos über Funk erfolgen kann. Ein lokales Netz, das den drahtlosen Anschluß von Hosts unterstützt, wird allgemein als W-LAN (Wireless Local Area Network) bezeichnet.

Beim Aufbau einer Verbindung finden eine Authentisierung und Autorisierung des Verbindungs-aufbauenden Host, wenn überhaupt, dann in einem Authentisierungs- und Autorisierungs-Server statt, der optional auch eine zentrale Abrechnung von anfallenden Gebühren ermöglichen kann (AAA-Server).

Die vorstehend beschriebenen Kommunikationssysteme und Netze unterscheiden sich somit hinsichtlich vieler Merkmale, so dass eine direkte Verbindung von Stationen des einen Systems mit denen des anderen Systems derzeit nicht möglich ist.

Einer Teilnehmerstation eines Telekommunikationssystems müssen bei der Installation für einen IP-Zugang die für einen Verbindungsaufbau erforderlichen IP-Adressen im voraus vor einem ersten Anschluss bzw. Verbindungsaufbau mit einer entsprechenden Netz-Schnittstelle über eine Software-Installation mitgeteilt werden. Dahingegen erfolgt bei einem lokalen Datennetz die Zuweisung aller erforderlichen IP-Adressen direkt automatisch bei jeder neuen Verbindung eines Host mit einem Datennetz. Eine Teilnehmerstation und ein Host sind somit keine zu der anderen Netztechnologie kompatible Einrichtungen.

Datenübertragung in heutigen, drahtgebundenen Telekommunikationsnetzen erfolgt in der Regel über Einwählverbindungen, bei welchen ein Teilnehmer mittels Modem/ISDN eine Datenverbindung zu seinem Diensteanbieter, z.B. Internet Service Provider (ISP), über seinen Telefonanschluß zu Hause über das öffentliche Telefonnetz aufbaut. Zunehmend kommen breitbandigere Datenanschlüsse zur Anwendung, in welchem Teilnehmer z.B. über die bekannte ADSL- (Asynchronous Digital Subscriber Line) Technologie angeschlossen werden können. Weitere Anschlußmöglichkeiten können z.B. über eine Satellitenverbindung realisiert sein, bei welchem der Datenstrom vom Datennetz zum Teilnehmer über eine Satellitenverbindung, der Datenstrom vom Teilnehmer zum Netz hingegen über eine Einwählverbindung erfolgen. In Regionen, in denen ein Fernsehkabelnetz verfügbar ist, kommen zudem zunehmend Kabelmodems zum Einsatz.

Durch diese erweiterten Technologien ist es möglich, die Begrenzung der Datenrate von 56 Kilobit pro Sekunde (PSTN) bzw. 64 Kilobit pro Sekunde (ISDN) auf mehrere Megabit pro Sekunde zu erhöhen.

In Gebieten, in denen keine ausreichende Infrastruktur vorhanden ist, die eine derartig hohe Datenrate zulassen würde, aber auch in Gebieten, in denen konkurrierende Netzanbieter ohne ausreichende Kabelinfrastruktur Dienste anbieten, finden funkbasierte Netzzugänge Anwendung, die den letzten Kilometer zwischen einer terrestrischen Netzeinrichtung und einer teilnehmerseitigen Netzabschlußeinrichtung überbrücken. Diese Systeme sind bekannt als Wireless Local Loop (WLL). Der Einsatz solcher Funktechnologien erlaubt nun seinerseits eine Datenübertragung auf einem gemeinsam genutzten Medium (Shared Medium), der Luftschnittstelle, und somit eine theoretisch bestmögliche Kapazitätsauslastung dieses Mediums.

Gemeinsam genutzte Übertragungsmedien eignen sich wesentlich besser zum Transport von paketvermittelten Daten, insbesondere IP-Daten, da sie den Bedürfnissen eines Internet-Dienste-Nutzers an die Übertragungsbandbreite (best effort) am ehesten gerecht werden.

Zunehmend werden jedoch Datendienste eingeführt, welche bestimmte Anforderungen an die Qualität des Übertragungsmediums stellen. Als Beispiel sei hier auf die Übertragung von Sprache über eine IP-Verbindung, bekannt als Voice-Over-IP (VoIP) aufgeführt, welche eine konstante Bitrate und eine minimale Verzögerung der einzelnen Datenpakete während der Übertragung erfordern.

Diese neuen Dienste, wie Sprache über IP, Videoübertragung, interaktives Fernsehen, haben unterschiedliche Anforderungen an das Übertragungsmedium. So gibt es Dienste, die eine konstante Bitrate erfordern, andere erlauben nur eine minimale Verzögerung (Latenz), wiederum andere sind empfindlich gegenüber Schwankungen der Übertragungsverzögerung der Datenpaketen untereinander (Jitter), wiederum andere erfordern mehrere der oben genannten Bedingungen. Diese Anforderungen, die unterschiedliche Dienste an ein Übertragungsmedium stellen, werden in Fachkreisen, z.B. der IETF (Internet Engineering Task Force) oder der 3GPP (3rd Generation Partnership Project, UMTS), unter dem Begriff Dienstegüte bzw. Quality of Service (QoS) zusammengefaßt.

Während in leitungsvermittelten Systemen, in der Regel Systeme mit konstanter Bitrate, z.B. 64 Kilobit pro Sekunde, QoS garantiert ist durch das individuelle Übertragungsmedium selbst, z.B. Jitter und Latenz einer ISDN-Verbindung bei konstanter Bitrate, ist es im Falle eines gemeinsam benutzten Mediums (Shared Medium), z.B. einer breitbandigen Luftschnittstelle, nicht möglich, ohne zusätzliche Verteilalgorithmen QoS-Garantien für einzelne Verbindungen geben zu können.

Aus diesem Grunde gibt es in den verschiedensten technischen Gremien, z.B. IETF, Bestrebungen, einzelne Datenströme mit individuellen QoS-Parametern zu kennzeichnen, die es einem Pakete-Verteilalgorithmus (Scheduler) ermöglichen, QoS-Bedingungen einzelner Verbindungen bestmöglichst gerecht zu werden. Genannt seien an dieser Stelle der bekannte DiffServ Standard (IETF) oder IntServ-Standard (IETF).

Es hängt nun von der Implementierung des Pakete-Verteilalgorithmus ab, wie effektiv die Pakete in einem gemeinsam genutzten Medium transportiert werden können, dies bei gleichzeitiger Berücksichtigung aller QoS-Anforderungen. Als Beispiel eines solchen Pakete-Verteilalgorithmus sei hier auf die bekannten Verfahren Class Based Queing (CBQ) und Weighted Fair Queing verwiesen.

Ein besonderes Problem tritt auf, wenn das gemeinsam genutzte Medium eine Funkschnittstelle ist. Bei Funkverbindungen kann es notwendig werden, die Funkverbindung zwischen einer Datenendeinrichtung, z.B. einem Mobilfunktelefon, und einer terrestrischen Netzeinrichtung zum drahtlosen Anschluß von Datenendeinrichtungen (z.B. Funk-Basisstation) zu einer anderen terrestrischen Netzeinrichtung zum drahtlosen Anschluß von Datenendeinrichtungen umzuleiten. In Fachkreisen wird dieses Verfahren zur Verbindungsübergabe auch als Handover oder Handoff bezeichnet. Dieser Handover kann notwendig werden, wenn z.B. eine Datenendeinrichtung aus dem Übertragungsbereich einer Funk-Basisstation in den einer anderen bewegt wird. Desweiteren kann, insbesondere bei stationärem Einsatz, insbesondere auch im Falle von Wireless Local Loop, ein solcher Handover auch dann notwendig werden, wenn die Funkausbreitungsbedingungen sich verschlechtern, z.B. durch Interferenz.

Im Falle eines Handovers von leitungsvermittelten Verbindungen ist es in bisherigen, verbindungsorientierten Funksystemen, z.B. in einer Implementierung gemäß dem bekannten Standard DECT GAP, möglich, bei der Auswahl möglicher Radio- bzw. Funkbasisstationen, zu denen ein Handover funktechnisch möglich wäre, nur diejenigen zu auszuwählen, die über ausreichend freie Übertragungskapazitäten verfügen.

Im Falle eines gemeinsam verwendeten Mediums, bekannt als Shared Medium, bei dem eine an dieses Medium angeschlossene Datenendeinrichtung jedes Datenpaket, das über dieses Medium transportiert wird, empfängt, wobei auf dem Medium mehrere Paketverbindungen mit unterschiedlichen QoS übertragen werden, ist es jedoch nicht ausreichend, diejenigen Basisstationen mit genügender Übertragungs-Bandbreite als mögliche Zielbasisstationen für einen Handover auszuwählen, da diese zwar über die ausreichende Übertragungsbandbreite verfügen, unter Umständen aber nicht in der Lage sind, die QoS verschiedener Verbindungen zu unterstützen.

Die Aufgabe der Erfindung besteht darin, ein Verfahren bzw. ein Datenübertragungs-System vorzuschlagen, das ein einfaches Handover von QoS-Verbindungen in einem gemeinsam benutzen Medium ermöglichen.

Diese Aufgabe wird durch ein Verfahren mit den Merkmalen des Patentanspruchs 1, insbesondere ein Verfahren zur Übergabe von funkbasierten Datenverbindungen mit Qualitätsmerkmalen zwischen Funkbasisstationen, bzw. ein Datenübertragungs-System zum Ausführen eines solchen Verfahrens mit den Merkmalen des Patentanspruchs 22 gelöst.

Vorteilhafte Ausgestaltungen sind Gegenstand abhängiger Ansprüche.

Eine für dieses Verfahren vorteilhafte Tatsache besteht darin, dass es Funksysteme gibt, bei denen die Initiative für einen Handover von den die Funkzugriffseinrichtungen kontrollierenden Netzeinheiten ausgeht, z.B. ein sogenanntes Basisstationssystem beim GSM-Mobilfunksystem bestehend aus Basisstations-Steuerung (BSC - Base Station Controller) und Basisstationen (BTS - Base Transceiver Station), als auch Systeme, bei denen die Initiative von der mobilen, über Funk angeschlossenen Datenendeinrichtung ausgeht, z.B. PT (Portable Termination) bei einem DECT-Schnurlostelefonsystem. Das Verfahren ist vorteilhafterweise auf beide Zugriffsarten anwendbar, jedoch nicht auf diese beschränkt.

Bei einem Verfahren zur Verwaltung von funkbasierten Datenverbindungen mit individuellen Qualitätsanforderungen zwischen funkbasierten Netzeinrichtungen unter Berücksichtigung entsprechender Qualitätsanforderungen in einem terrestrischen Datenübertragungs-System mit zumindest einer funkbasierten Netzzugangseinrichtung und zumindest einer funkbasierten Teilnehmereinrichtung, die über eine paketorientierte Funkschnittstelle /shared medium miteinander kommunizieren, werden vorteilhafterweise Ressourcenbestandsanforderungen und/oder Ressourcenverbrauch und/oder freie Ressourcen des Datenstroms über die Funkschnittstelle zwischen zumindest einer Teilnehmerendeinrichtung und der damit kommunizierenden Netzzugangseinrichtung für zumindest eine von diesen durch einen oder mehrere Parameter bestimmt. Eine solche Bestimmung bietet eine einfache Möglichkeit, vor einem Handover zu gewährleisten, aus den für eine Teilnehmerendeinrichtung alternativ wählbaren Netzzugangseinrichtungen bzw. Basisstationen eine oder mehrere auszuwählen, die für den gewünschten Dienst ausreichende Ressourcen verfügbar haben. Dabei ist es besonders vorteilhaft, wenn direkt die Ressourcenbestände, freie Ressourcen und/oder benutzte Ressourcen bestimmbar sind, dies je nach Betrachtungsweise bei der Parameterbestimmung im Bereich der Teilnehmerendeinrichtung oder der Netzzugangseinrichtung.

Eine Erfassung oder Bestimmung der Ressourcendaten bezüglich entsprechender Daten in der Netzzugangseinrichtung vorzunehmen ermöglicht eine direkte Bereitstellung der erforderlichen Parameter in derselben Einrichtung, in der die dafür zu verarbeitenden Daten anfallen.

Eine Erfassung oder Bestimmung der Ressourcendaten bezüglich entsprechender Daten teilnehmerseitig, insbesondere in der Teilnehmerendeinrichtung, ermöglicht die Bestimmung des Ressourcenbedarfs für eine Verbindung direkt in der Einrichtung, die entsprechende Ressourcen bei einer Netzzugangseinrichtung anfordern muss.

Durch den Vergleich der entsprechenden Parameter ist es möglich, die Qualitätsanforderungen eines existierenden Gesamtdatenstroms über eine Teilnehmerendeinrichtung bei einer Übergabe der Funkverbindung (Handover, Handoff) von der kommunizierenden Netzzugangseinrichtung an andere, funkbasierte Netzzugangseinrichtungen zu berücksichtigen.

Durch die Ermittlung benötigter Funkressourcen vor der eigentlichen Initiierung des Aufbaus einer oder mehrerer Funkverbindungen können zudem bereits vor einem Verbindungsaufbau über den Vergleich entsprechender Parameter jeweils eine oder mehrere geeignete funkbasierte Netzzugangseinrichtungen ausgewählt werden.

Als Parameter zumindest ein Dienstegüte-Qualitätsmerkmal, insbesondere Latenz oder Jitter, durch eine Priorisierungs-Konstante zu beschreiben, bietet eine einfache Möglichkeit, diese für die Dienstegüte wesentlichen Qualitätsmerkmale zu handhaben.

Zumindest einen der Datenströme durch einen Datenstrom-Parameter zu bestimmen, insbesondere als sogenannte Datenstrom-Konstante durch das Produkt aus dessen Priorisierungs-Konstante und Bandbreite, bietet einen Wert, der den Ressourcenbedarf einer einzelnen Verbindung eindeutig beschreibt. Der Begriff Konstante ist dabei gegebenenfalls nicht als dauerhaft feste Größe, sondern als feste Größe für eine momentane Verbindung zu verstehen.

Insbesondere läßt sich damit auch der Gesamt-Ressourcenbedarf einer Netzabschlußeinrichtung durch einen einzigen Kommunikations-Parameter bestimmen. Der Gesamt-Ressourcenbedarf ist eine wichtige Größe, da bei einer Verbindungsweitergabe in der Regel nicht nur eine einzelne von mehreren Verbindungen an eine andere Netzzugangseinrichtung weitergegeben wird, sondern u.U. mehrere oder sogar alle aktuell bestehenden Verbindungen weitergegeben werden müssen. Der Kommunikations-Parameter ergibt sich dabei vorteilhafterweise als Kommunikations-Konstante aus der Summe der Datenstrom-Konstanten aller Datenverbindungen über diese Netzabschlußeinrichtung. Der Ressourcenverbrauch einer funkbasierten Netzzugangseinrichtung ergibt sich entsprechend einfach aus der Summe aller Kommunikations-Parameter der über Funk angeschlossenen Netzabschlußeinrichtungen, und zwar insbesondere als eine Art Ressourcen-Konstante.

Die Gesamtheit aller freien, insbesondere verfügbar freien Ressourcen einer funkbasierten Netzzugangseinrichtung läßt sich in einfacher Weise aus der Differenz von den Gesamtressourcen dieser Netzzugangseinrichtung und deren benutzen Ressourcen bestimmt wird. Daraus ergibt sich eine Größe, die zweckmäßigerweise als Frei-Konstante bezeichnet wird. Die Gesamtheit aller freien Ressourcen der funkbasierten Netzzugangseinrichtungen kann daher insbesondere zur Entscheidung für die Übergabe einer Funkverbindung zu einer anderen funkbasierten Netzeinrichtungen verwendet werden.

Einer Netzabschlußeinrichtung können Informationen über freie Ressourcen von funkbasierten Netzeinrichtungen zweckmäßigerweise über einen allgemeinen Signalisierungskanal mit sogenannter Broadcast-Funktion oder in einem neuen oder bereits bestehenden Nachrichtenkanal, mitgeteilt werden. Außerdem besteht die Möglichkeit, einer Netzabschlußeinrichtung bei Bedarf Informationen über freie Ressourcen in funkbasierten Netzzugangseinrichtungen über einen Dialog, insbesondere einen von der Netzabschlußeinrichtung initiieren Dialog, von den funkbasierten Netzeinrichtungen abzufragen. Einer Netzabschlußeinrichtung können regelmäßig aktualisierte Informationen über freie Ressourcen in funkbasierten Netzeinrichtungen bei jedem Verbindungsaufbau und/oder bei Änderungen im Ressourcenverbrauch in funkbasierten Netzzugangseinrichtungen über insbesondere Nachrichten mitgeteilt werden.

In einer entsprechend ausgestatteten Netzabschlußeinrichtung und/oder in einer Steuereinrichtung des Datenübertragungs-Systems können die Entscheidung bezüglich der Übergabe einer Funkverbindung anhand der Parameter getroffen werden, so dass nur eine begrenzte Anzahl von Systemeinrichtungen entsprechend ausgestattet oder nachgerüstet werden muss.

Die Funkschnittstelle kann insbesondere auch gemäß dem Bluetooth-Standard, dem DECT-Standard, dem HomeRF-Standard, dem IEEE 802.11-Standard, dem IEEE 802.11b-Standard, dem IEEE 802.11a-Standard, dem HiperLAN-Standard, dem HiperLAN2-Standard, dem GSM-Standard oder dem UMTS-Standard verwaltet werden. Natürlich ist auch eine Umsetzung in zukünftige Systeme und Standards möglich. Die QoS-Parameter können auch aus DiffServ-Priorisierungen abgeleitet werden.

Die QoS-Parameter aus den Kopf-Daten (Header) eines Datenpakets, z.B. das bekannte Type-Of-Service (TOS) Feld eines IP-Paket-Headers, welches zur Kennzeichnung von DiffServ-Priorisierungen verwendet wird, sowie aus der Nutzinformation (Payload) selbst abgeleitete QoS-Parameter, z.B. die Information, dass es sich bei der transportierten Nutzinformation um ein Echtzeitprotokoll- (RTP: Real Time Protocol) Datenpaket handelt, welches mit einer hohen Priorität zu kennzeichnen ist, ermöglichen die Übernahme bei den einzelnen Verbindungen bekannter Daten zur Bestimmung der vorstehenden Parameter. Insbesondere sind keine aufwendigen Algorithmen oder gar zusätzliche Bauelemente erforderlich, wenn solche stets vorliegenden und abfragbaren Daten verwendet werden.

Ein Funk-Datenübertragungs-System kann zum Durchführen eines solchen Verfahrens insbesondere dann verwendet werden, wenn es mit zumindest einer funkbasierten Netzzugangseinrichtung, mit zumindest einer funkbasierten Teilnehmereinrichtung zum teilnehmerseitigen Anschluß von Datenendgeräten, die über eine Funkschnittstelle miteinander kommunizieren, wobei die Funkschnittstelle ein gemeinsam genutztes Medium (insbes. "shared medium") darstellt, mit einer Empfangseinrichtung in jedem einer Vielzahl der Datenendgeräte zum Empfangen jedes Datenpakets, das über die Funkschnittstelle von der zumindest einen funkbasierten Netzzugangseinrichtung gesendet wird, und mit zumindest einer Verwaltungseinrichtung in einer Funk-Datenübertragungs-Systemeinrichtung zur Verwaltung von funkbasierten Datenverbindungen mit individuellen Qualitätsanforderungen zwischen funkbasierten Netzeinrichtungen unter Berücksichtigung entsprechender Qualitätsanforderungen ausgestattet ist, falls die zumindest eine Verwaltungseinrichtung zum Bestimmen von Ressourcenbestandsanforderungen und/oder Ressourcenverbrauch und/oder freie Ressourcen des Datenstroms über die Funkschnittstelle zwischen zumindest einer der Teilnehmerendeinrichtungen und der damit kommunizierenden Netzzugangseinrichtung für zumindest eine von diesen durch einen oder mehrere Parameter ausgebildet ist.

Bei einem solchen Funk-Datenübertragungs-System kann das Datennetz insbesondere ein PSTN/ISDN-Telekommunikationsnetz, ein Breitband-Telekommunikationsnetz (xDSL), ein Mobilfunknetz insbesondere 1., 2. bzw. 3. Generation, ein lokales Datennetz (LAN) oder ein Fernsehnetz sein. Teilnehmerseitig kann es z.B. auch als ein "Wireless Local Loop"-Zugangsnetz ausgebildet sein.

Ein Ausführungsbeispiel wird nachfolgend anhand der Zeichnung näher erläutert. Es zeigen:
- Fig. 1: in der linken unteren Bildhälfte ein herkömmliches verdrahtetes Tele-Kommunikationssystem, in der linken oberen Bildhälfte ein Funk-Telekommunikationssystem und in der rechten Hälfte ein lokales Datennetz,
- Fig. 2A und 2B: einen schematischen Aufbau eines Telekommunikationsnetzes mit einer Einrichtung für Einwahlverbindungen zum Internetzugang in der Ausführung des drahtgebundenen Zugangs bzw. mit Hilfe eines sogenannten Wireless Local Loop Systems,
- Fig. 3: ein konkretes Ausführungsbeispiel.

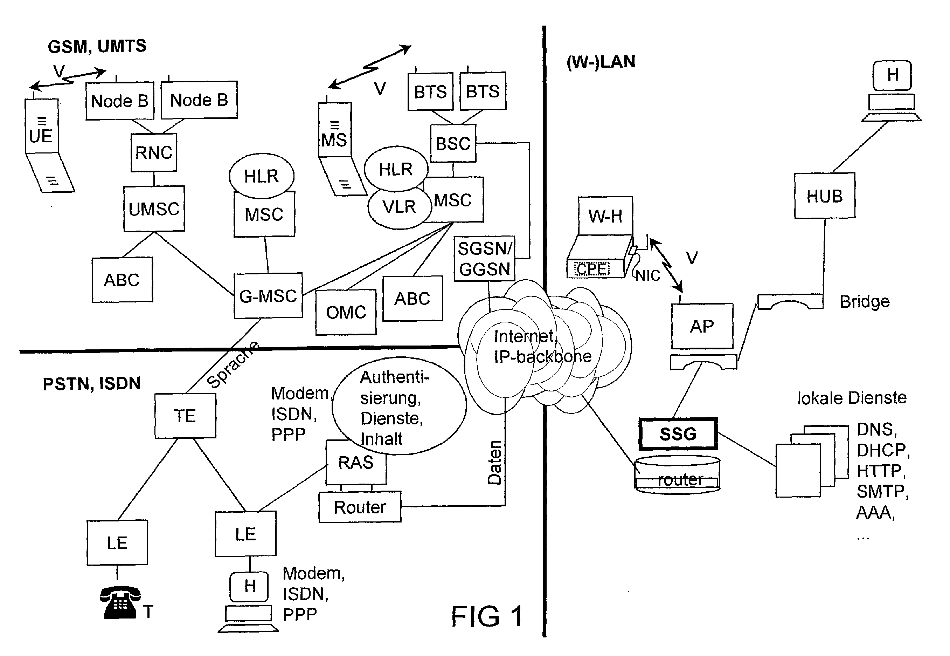

Wie aus Fig. 1, links unten ersichtlich, weist ein Tele-Kommunikationssystem bzw. -netz vorzugsweise drahtgebundene Teilnehmereinrichtungen, beispielsweise Telefone T und über eine Modemeinrichtung angeschlossene Computer bzw. Host H auf. Das Tele-Kommunikationssystem kann beispielsweise ein diensteintegrierendes digitales Nachrichtennetz ISDN (Integrated Services Digital Network), ein herkömmliches öffentliches Fernsprechnetz PSTN (Public Switched Telephone Network) oder ein digitales xDSL-System (DSL: Digital Subscriber Line) sein.

Lokale Ortsämter LE (Local Exchange), mit denen die einzelnen Teilnehmereinrichtungen T bzw. H verbunden sind, können untereinander und mit weiteren Netzeinrichtungen, z.B. einem Transitamt TE (Transit Exchange) verbunden sein, die zum Übergang bzw. der Kommunikation mit anderen Netzen dienen.

Insbesondere für den Anschluß von Hosts an ein Datennetz über ein Transportnetz (ISDN) weist das Telekommunikationssystem PSTN/ISDN einen Server für einen entfernten Datenzugriff auf, der nachfolgend als Fernzugriffs-Server RAS (Remote Access Server) bezeichnet wird. Der Fernzugriffs-Server RAS ist bei den derzeitigen Systemen für den Aufbau von Verbindungen zu dem Teilnehmer-Datenendeinrichtungen, insbesondere Hosts H, erforderlich und arbeitet mit einem Punkt-zu-Punkt-Protokoll PPP, welches üblicherweise den Anforderungen an das Internet-Protokoll IP genügt. Die Authentisierung einer Teilnehmerstation T bzw. H erfolgt derzeit üblicherweise über den Dienst RADIUS (Remote Authentication Dial In User Service). Außerdem weist der Fernzugriffs-Server RAS in der Regel Modembänke für den netzseitigen und teilnehmerseitigen Datentransport und Router für die Verbindung zum IP-basierten Internet, bekannt als IP-backbone, auf.

Wie aus Fig. 1, links oben ersichtlich, weist ein zellulares Funk-Kommunikationssystem bzw. -netz GSM Teilnehmereinrichtungen MS auf, die über eine Funkschnittstelle V mit einer Basis-Sende/Empfänger-Station BTS kommunizieren. Die Teilnehmerstationen sind z.B. mobile Stationen MS oder anderweitige mobile oder stationäre Endgeräte.

Die Basis-Sende/Empfänger-Station BTS stellt auch Informationskanäle zur Verfügung, wie u.a. einen Kontroll- und Organisationskanal (BCCH - Broadcast Control Channel), einen Frequenz-Korrekturkanal (FCCH - Frequency Correction Channel) oder einen Kanal für willkürlichen Zugriff (RACH - Random Access Channel).

Eine oder mehrere Basis-Sende/Empfänger-Stationen BTS sind zu deren Steuerung mit einer Basisstations-Steuereinrichtung BSC verbunden. Die Basisstations-Steuereinrichtung BSC ist wiederum mit einer Mobilvermittlungsstelle MSC verbunden. Mobilvermittlungsstellen MSC, die innerhalb eines Funknetzes untereinander vernetzt sind, stellen meistens die Funktion einer Besucher-Registrierungsdatenbank bzw. eines Besucherregisters VLR (Visitor Location Register) bereit, welches die Aufenthalts-Registrierungsanforderungen der mobilen Stationen MS (Mobile Station) entgegen nimmt und somit eine Dezentralisierung des Signalisierungsaufkommens erlaubt. Die Besucherdateien eines Besucherregisters VLR stehen in Kontakt mit entsprechenden Heimatregistern HLR (Home Location Register), von welchen es in jedem Funk-Telekommunikationssystem mindestens eine Instanz gibt, welche häufig vorteilhafterweise ebenfalls auf der technischen Plattform einer Mobilvermittlungsstelle MSC bereitgestellt wird. In den Heimatregistern HLR werden teilnehmerspezifische Datensätze gespeichert, z.B. Authentisierungsparameter.

Zudem gibt es in Funk-Kommunikationssystemen spezielle, ausgezeichnete Mobilvermittlungsstellen G-MSC, welche z.B. für Sprache den Zugang zu anderen, heterogenen Netzen, z.B. Festnetzen wie PSTN/ISDN, aber auch anderen Funknetzen ermöglichen. Diese ausgezeichneten Mobilvermittlungsstellen G-MSC werden üblicherweise als Gateway-MSC (G-MSC) bezeichnet.

Datenverkehr, insbesondere Internet-Datenverkehr, wird in Funksystemen, z.B. in GSM-Netzen, vorteilhafterweise über spezielle Netzeinrichtungen, z.B. GSN (GPRS Support Nodes, GPRS - General Packet Radio Service), unmittelbar den Datennetzen zugeführt. Diese Netzkomponenten existieren häufig in Knoten oder Einrichtungen, wie einer ausführenden Komponente SGSN (Serving GSN) und/oder einer Netzübergangskomponente GGSN (Gateway GSN).

Fig.1 zeigt beispielhaft diese mögliche Ausführung für das Mobilfunksystem GSM. Desweiteren ist ein mögliches Ausführungsbeispiel für Mobilfunksystem der dritten Generation (z.B. UMTS) dargestellt. Dabei sind die üblichen Abkürzungen angegeben, also im Vergleich zu GSM: UE (User Equipment) statt MS, NodeB statt BTS, UMSC (UMTS MSC) statt MSC bzw. RNC (Radio Network Controller) statt BSC.

Zur Steuerung und Kontrolle des Funk-Kommunikationssystems GSM ist die Mobilvermittlungsstelle MSC mit einem Betriebsund Wartungszentrum OMC verbunden. Ferner ist die Mobilvermittlungsstelle MSC, wie beschrieben, mit einem Heimatregister HLR und einem Besucherregister VLR verbunden oder weist diese in sich auf. In dem Heimatregister HLR sind teilnehmerspezifische Daten abgespeichert, z.B. der letzte bekannte oder der aktuelle Aufenthaltsort der Teilnehmerstation MS und deren Berechtigung bestimmte Dienste zu benutzen. Im Besucherregister VLR werden auch Daten zu Teilnehmerstationen MS verwaltet, die mit dem Netz kommunizieren, aber einem anderen Netzbetreiber zuzuordnen sind.

Die nachfolgend beschriebenen Entwicklungen sind auch auf andere Funk-Kommunikationssystem übertragbar, beispielsweise das UMTS.

Wie aus Fig. 1, rechte Seite ersichtlich, weist ein lokales Datennetz LAN, z.B. ein lokales Funknetz WLAN, Stationen auf, die nachfolgend als Host H bezeichnet werden. Ein typisches Beispiel für ein solches Datennetz (W-)LAN ist ein firmeninternes Ethernet. Darin stehen die einzelnen Stationen bzw. Hosts H direkt untereinander oder über Brücken (Bridge) und Hubs miteinander in Verbindung. Ein Hub kann dabei im wesentlichen als eine Verteilereinrichtung angesehen werden, an der mehrere Datenendstationen H zugleich angeschlossen werden können und dann alle Daten zugeleitet bekommen. Eine Brücke ist im wesentlichen einem Hub vergleichbar, bietet aber darüber hinaus eine Möglichkeit einer Segmentierung bzw. Verteilung der hindurchlaufenden Daten.

Neben fest verdrahteten Verbindungen in einem Datennetz LAN gibt es in Funk-Datennetzen WLAN (Wireless Local Area Network) zu funkgestützten Hosts W-H auch Verbindungen über Funkschnittstellen V. Für solche Funkverbindungen kann u.a. das sogenannte Bluetooth-Funk-Zugriffsprotokoll (Bluetooth radio AP) verwendet werden. Dabei handelt es sich um ein sehr einfaches Protokoll, das lediglich eine Punkt-zu-Punkt-Verbindung zwischen zwei gerade miteinander kommunizierenden Einrichtungen unterstützt. Es ist somit wesentlich einfacher aufgebaut, als die Protokolle, die bei zellulären Funksystemen verwendet werden.

Gegebenenfalls kann in solchen Systemen eine Funkschnittstelle basierend auf dem IEEE 802.11 Standard Anwendung finden.

Ein solches Datennetz (W-)LAN kann auch einen oder mehrere Diensteserver aufweisen, insbesondere mit nachfolgend beschriebenen logischen Einrichtungen, z.B. einem Domain-Namen-Server DNS. Diese Einrichtungen können zum Teil aber auch in anderen oder eigenständigen Einrichtungen aufgenommen sein, wobei sie als Klienten- bzw. Serverteil (client part / server part) aufgeteilt und/oder eingerichtet werden können.

Ein HTTP-Server erlaubt dem Teilnehmer "per Mausklick" auf von ihm ausgewählte Internet-Seiten zuzugreifen, ohne die spezifischen IP-Adressen der jeweiligen Anbieter kennen zu müssen.

Mittels eines Dynamischen Host-Konfigurierungs-Protokolls DHCP bzw. eines sogenannten DHCP-Servers wird beim Anschluß eines Host H an das Datennetz (W-)LAN eine Adresse, insbesondere IP-Adresse, vergeben, unter welcher der neu hinzugekommene Host H im Netz eindeutig identifizierbar und ansprechbar ist. Zumeist erfolgt die Adressvergabe variabel, so dass der international für alle Hosts H nur begrenzt verfügbare Adressraum nicht erschöpft wird. Vorteilhafterweise kann der DHCP-Server IP-Adressen zeitlich limitiert vergeben, so dass ein Host H nach Ablauf einer festgelegten Zeit eine neue IP-Adresse anfordern muß.

Ferner kann der Zugriffs-Server AS einen Authentisierungs-und Autorisierungs-Server (AA-Server) aufweisen, der optional als Accounting-Server (AAA-Server) auch eine zentrale Abrechnung von anfallenden Gebühren ermöglichen kann.

Weitere Servereinrichtungen können dem Anschluss an Netze wie das Internet dienen, beispielsweise sogenannte POP3-Server und/oder SMTP-Server (SMTP: Simple Mail Transfer Protocol), die zum Austausch von elektronischen Briefen (eMails) dienen.

Im Idealfall reicht die Einführung einer nachfolgend als Diensteauswahl-Überleiteinrichtung bzw. Diensteauswahl-Gateway SSG (Service Selection Gateway) bezeichneten Einrichtung in einem Datennetz (W-)LAN, wobei zur Steuerung erforderlicher Funktionen das für sich bekannte einfache NetzManagement-Protokoll (SNMP: Simple Network Management Protocol) einsetzbar ist.

In der Regel kann ein handelsüblicher Standard-Host W-H mit einer Zentralverarbeitungseinrichtung CPE und einer Netzschnittstellenkarte NIC (Net Interface Card) weiterhin über eine Funkschnittstelle V mit einer handelsüblichen Brücke (AP) kommunizieren. Dabei können bestehende Protokolle für einen DHCP-Zugriff verwendet werden, z.B. 802.11 oder ein HiperLAN-Funk-Zugriffs-Protokoll. Die Brücke bildet in üblicher Art und Weise die Schnittstelle zwischen z.B. den Protokollen für Datennetz-Funkschnittstellen (802.11) und Datennetz-Kabelschnittstellen (802.3).

In dem System können außerdem herkömmliche Funkstationen eingesetzt werden, die als alternative Funktechnologie Punkt-zu-Punkt-Verbindungen mit anderen Einrichtungen, z.B. einer Datenendeinrichtung H mit einer Funkschnittstelle, unterstützen. Ein diesbezüglich übliches Standardprotokoll ist dafür das sogenannte Bluetooth-Funkzugriffs-Protokoll.

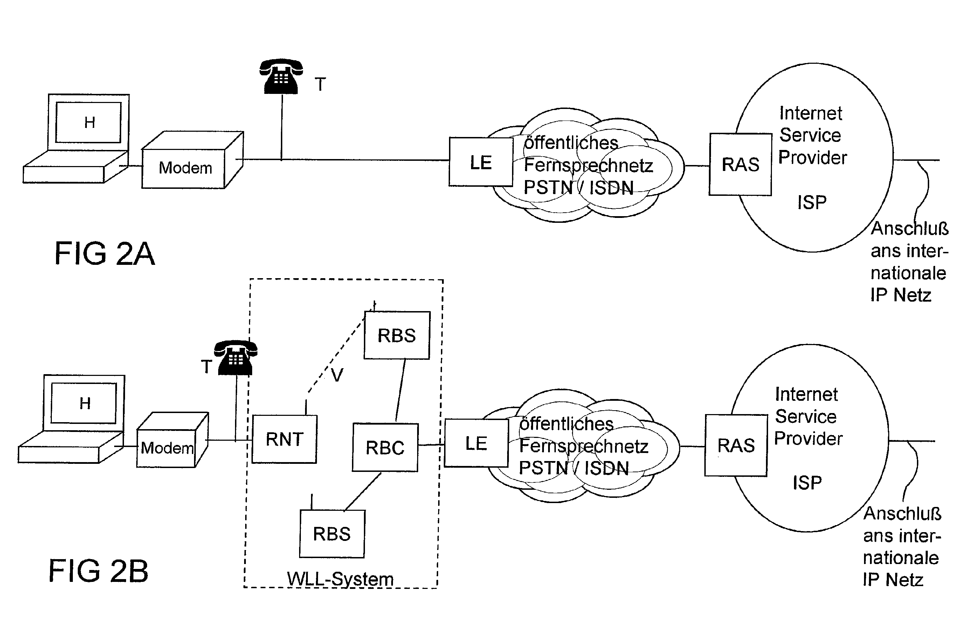

Wie aus Fig. 2A ersichtlich, weist ein Telekommunikationssystem bzw. -netz vorzugsweise drahtgebundene Teilnehmereinrichtungen, beispielsweise Telefone T und über eine Modemeinrichtung Modem angeschlossene Computer bzw. Host H auf. Das Tele-Kommunikationssystem kann beispielsweise ein diensteintegrierendes digitales Nachrichtennetz ISDN, ein herkömmliches öffentliches Fernsprechnetz PSTN oder ein digitales xDSL-System sein.

Fig. 2B zeigt den logisch gleichen Aufbau mit dem Unterschied, dass ein Teil der Teilnehmeranschlußleitung durch ein funkbasiertes Wireless Local Loop System WLL ersetzt ist, welches als Netzzugangseinrichtung(en) aus einer oder mehreren Funk-Basisstationen, nachfolgend zur Unterscheidung als Radio-Basisstationen RBS (Radio Base Station) bezeichnet, besteht, an welche eine oder mehrere teilnehmerseitige Netzabschlußeinrichtungen RNT (Radio Network Termination) über eine Funkschnittstelle V angeschlossen sein können. Die Radio-Basisstaionen RBS werden durch eine Basisstations-Steuereinrichtung RBC (Radio Base Station Controller) gesteuert, welche an das Ortsamt LE (Local Exchange) eines Telekommunikationsnetzes angeschlossen ist.

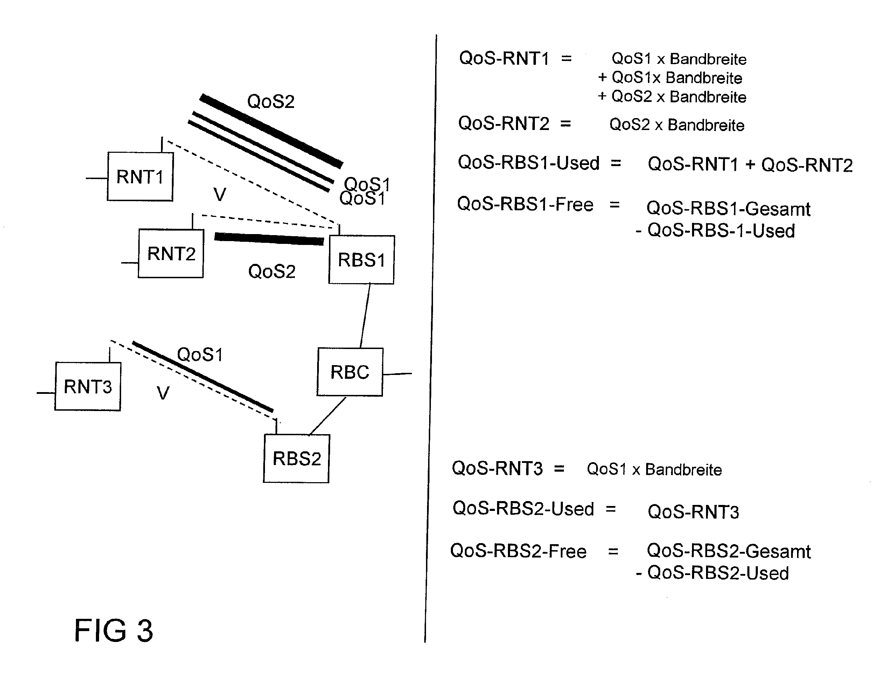

Im Ausführungsbeispiel seien gemäß Fig. 3 die einzelnen Datenpakete mit einer QoS-Kennung versehen, die bestimmten vorgegebenen oder vorgebbaren QoS-Anforderungen entspricht, z.B. analog zu DiffServ. Jedes Datenpaket einer Paket-Datenverbindung enthält jeweils die gleiche Kennung. Eine Radio-Basisstation RBS kann nun Datenverbindungen mit mehreren Datenendeinrichtungen unterhalten, und diese können mehrere Verbindungen mit unterschiedliche QoS-Anforderungen unterhalten.

In diesem Zusammenhang werden vorteilhafterweise eine oder mehrere QoS-Konstanten definiert, welche eine Aussage über die QoS-Anforderungen einzelner Datenendeinrichtungen bzw. über freie QoS-Ressourcen einer Radio-Basistation RBS ermöglichen. In Fig. 3 ist dies an einem schematischen Beispiel veranschaulicht. Die dargestellten Netzkomponenten sind in Analogie zu Fig. 2 bereitgestellt, wobei aus Gründen der Übersichtlichkeit jedoch auf die Darstellung der für das Verfahren nicht unbedingt notwendigen Komponenten verzichtet wurde. Mit einer ersten Radio-Basisstation RBS 1 sind zwei Netzabschlußeinrichtungen RNT1 und RNT2 verbunden, die ihrerseits mit einer oder mehreren Datenendeinrichtungen (W-H, H) verbunden sind. Die erste Netzabschlußeinrichtung RNT1 hält z.B. gleichzeitig drei Datenverbindungen aufrecht, zwei davon gekennzeichnet mit einem QoS-Parameter QoS1, eine mit einem Parameter QoS2, wobei jede dieser Verbindungen eine eigene, individuelle Bandbreite hat. Der QoS-Parameter kennzeichnet z. B. bestimmte Anforderungen an Latenz und Jitter. Die zweite Netzabschlußeinrichtung RNT2 verfügt über eine Datenverbindung mit dem QoS-Parameter QoS2 und einer eigenen, individuellen Bandbreite.

Desweiteren zeigt Fig. 3 eine zweite Radio-Basisstation RBS2 welche mit einer Netzabschlußeinrichtung RNT3 verbunden ist, die eine Datenverbindung mit dem QoS-Parameter QoS1 mit einer eigenen, individuellen Bandbreite unterhält.

Somit kann für jede der Netzabschlußeinrichtungen RNTx (x = 1,2,...) eine erste Priorisierungs- bzw. QoS-Konstante ermittelt werden, welche sich aus der Summe der QoS-Parameter aller Datenverbindungen, die über diese Netzabschlußeinrichtung RNTx ablaufen, multipliziert mit der jeweiligen, individuellen Bandbreite, ergibt, im Beispiel QoS-RNT1 bzw. QoS-RNT2 oder QoS-RNT3.

Desweiteren kann man eine zweite Kommunikations-QoS-Konstante ermitteln, welche eine Aussage über alle, an einer Radio-Basisstation RBS1, RBS2 verwendeten Ressourcen ermöglicht, indem man die QoS-Parameter aller, mit dieser Basisstation RBS2 bzw. RBS2 kommunizierenden Netzabschlußeinrichtungen RNTx, addiert, was im Beispiel zu den Summen QoS-RBS1-Used bzw. QoS-RBS2-Used führt.

In Kenntnis der physikalischen Eigenschaften und Qualitätsmessungen der Luftschnittstelle VL an einer Radio-Basisstation RBSx kann eine weitere, dritte Gesamt-Konstante ermittelt werden, welche eine Aussage über die gesamten, verfügbaren Ressourcen dieser Basisstation ermöglicht, im Beispiel QoS-RBS1-Gesamt bzw. QoS-RBS2-Gesamt.

Die noch freien, unbenutzten Ressourcen einer Basisstation ergeben sich dann als weitere Frei-Konstante QoS-RBSx-Free aus der Differenz der Konstanten, die den gesamten (QoS-RBSx-Gesamt) und den genutzten Ressourcenvorrat (QoS-RBSx-Used) charakterisieren, im Beispiel QoS-RBS1-Free bzw. QoS-RBS2-Free.

Kommuniziert man diesen Wert zu den angeschlossenen Netzabschlußeinrichtungen RNTx, so können diese, unter Ermittlung ihres jeweils eigenen Ressourcenbedarfs QoS-RNTx, ermitteln, ob eine Radio-Basisstation RBSx im Falle eines Handovers die notwendigen QoS-Anforderungen aller Datenverbindungen von angeschlossenen Netzabschlußeinrichtungen RNTx erbringen kann.

Eine vorteilhafte Ausgestaltung dieses Verfahrens besteht darin, die entsprechenden Frei-Konstanten QoS-RBSx-Free über Broadcast-Meldungen in einem Broadcast-Kanal, beispielsweise dem BCCH, auszusenden oder in einem eigenen oder bereits existierenden Nachrichten- bzw. Signalisierungskanal. Derartige Kanäle sind z.B. im Falle des GSM-Standards für verschiedenartige Nachrichten für sich genommen bekannt.

Eine weitere, vorteilhafte Ausgestaltung besteht darin, dass eine Netzabschlußeinrichtung RNT bei Bedarf über eine Anfrage bei einer potentiellen Ziel-Radio-Basisstation RBS die entsprechenden Parameter abfragt.

In Funkzugangsnetzen, in welchen die Initiative für einen Handover vom Datennetz ausgeht, kann sich eine entsprechende Steuereinheit im Netz, z.B. im oder das Mobile Switching Center (MSC im GSM), die jeweiligen Konstanten QoS-RNTx bzw. QoS-RBSy-Free ermitteln und in Analogie zu oben Beschriebenem verfahren.

## Patentansprüche

1. Verfahren zur Verwaltung von funkbasierten Datenverbindungen mit individuellen Qualitätsanforderungen (QoS) zwischen funkbasierten Netzeinrichtungen (RBS, RNT; RBS1, RBS2, RNT1, RNT2, RNT3) unter Berücksichtigung entsprechender Qualitätsanforderungen in
- einem Datenübertragungs-System mit zumindest einer funkbasierten Netzzugangseinrichtung (RBS; RBS1, RBS2) und zumindest einer funkbasierten Teilnehmereinrichtung (RNT; RNT1, RNT2, RNT3), die über eine Funkschnittstelle (V) miteinander kommunizieren, wobei
- die Funkschnittstelle (V) ein gemeinsam genutztes Medium darstellt, in dem jedes einer Vielzahl von Datenendgeräten (H, W-H), welches mit einer Teilnehmerendeinrichtung (RNT) verbunden ist, jedes Datenpaket, das über diese Funkschnittstelle (V) von der zumindest einen funkbasierten Netzzugangseinrichtung (RBS) gesendet wird, empfangen kann,
**dadurch gekennzeichnet, dass**
- Ressourcenbestandsanforderungen und/oder Ressourcenverbrauch und/oder freie Ressourcen des Datenstroms, insbesondere Gesamtdatenstroms, über die Funkschnittstelle (V) zwischen zumindest einer Teilnehmerendeinrichtung (RNT; RNT1, RNT2, RNT3) und der damit kommunizierenden Netzzugangseinrichtung (RBS; RBS1, RBS2) für zumindest eine von diesen durch einen oder mehrere Parameter bestimmt werden.

2. Verfahren nach Anspruch 1, bei dem
eine Erfassung oder Bestimmung der Ressourcendaten bezüglich entsprechender Daten in der Netzzugangseinrichtung (RBS1; RBS2) erfolgt.

3. Verfahren nach Anspruch 1 oder 2, bei dem
eine Erfassung oder Bestimmung der Ressourcendaten bezüglich entsprechender Daten teilnehmerseitig, insbesondere in der Teilnehmerendeinrichtung (RNT1; RNT2; RNT3), erfolgt.

4. Verfahren nach einem vorstehenden Anspruch, bei dem durch den Vergleich der an einer der funkbasierten Netzzugangseinrichtung verfügbaren Ressourcen und der für einen existierenden Datenstrom an einer der funkbasierten Netzabschlußeinrichtung erforderlichen Ressourcen anhand entsprechender Parameter (QoS-RBS1-Free, QoS-RBS2-Free, QoS-RNT1, QoS-RNT2, QoS-RNT3) die Qualitätsanforderungen eines existierenden Gesamtdatenstroms über eine Teilnehmerendeinrichtung (RNT1; RNT2; RNT3) bei einer Verbindungsweitergabe von der kommunizierenden Netzzugangseinrichtung (RBS1) zu einer anderen funkbasierten Netzzugangseinrichtung (RBS2) berücksichtigt werden.

5. Verfahren nach einem vorstehenden Anspruch, bei dem als Parameter zumindest ein Dienstegüte-Qualitätsmerkmal (QoS) durch eine Priorisierungs-Konstante (QoS-RNTx) beschrieben wird.

6. Verfahren nach einem vorstehenden Anspruch, bei dem zumindest einer der Datenströme durch einen Datenstrom-Parameter bestimmt wird, insbesondere als Datenstrom-Konstante durch das Produkt aus dessen Priorisierungs-Konstante und Bandbreite.

7. Verfahren nach Anspruch 6, bei dem
der Gesamt-Ressourcenbedarf einer Teilnehmerendeinrichtung (RNT; RNT1, RNT2, RNT3) durch einen Kommunikations-Parameter (QoS-RNT1, QoS-RNT2, QoS-RNT3) bestimmt wird.

8. Verfahren nach Anspruch 7, bei dem
sich der Kommunikations-Parameter (QoS-RNT1, QoS-RNT2, QoS-RNT3) als Kommunikations-Konstante aus der Summe aller Datenstrom-Konstanten aller Datenverbindungen über diese Teilnehmerendeinrichtung (RNT; RNT1, RNT2, RNT3) ergibt.

9. Verfahren nach Anspruch 7 oder 8, bei dem
der Ressourcenverbrauch einer funkbasierten Netzzugangseinrichtung (RBS1; RBS2) aus der Summe aller der Kommunikations-Parameter (QoS-RNT1 + QoS-RNT2; QoS-RNT3) der über Funk angeschlossenen Netzabschlußeinrichtungen (RNT1, RNT2) bestimmt wird, insbesondere als eine Ressourcen-Konstante (QoS-RBS1-Used, QoS-RBS2-Used) bestimmt wird.

10. Verfahren nach einem vorstehenden Anspruch, bei dem die Gesamtheit aller freien, insbesondere verfügbar freien Ressourcen einer funkbasierten Netzeinrichtung (RBS1, RBS2) aus der Differenz von deren Gesamtressourcen (QoS-RBS1-Gesamt, QoS-RBS2-Gesamt) und deren benutzen Ressourcen bestimmt wird, insbesondere als Frei-Konstante (QoS-RBS1-Used bzw. QoS-RBS2-Used) bestimmt wird.

11. Verfahren nach einem vorstehenden Anspruch, bei dem die Gesamtheit aller freien Ressourcen der funkbasierten Netzeinrichtungen (RBS1), insbesondere die Frei-Konstante (QoS-RBS1-Free, QoS-RBS2-Free), zur Entscheidung für die Übergabe einer Funkverbindung zu einer anderen funkbasierten Netzeinrichtungen (RBS2) verwendet wird.

12. Verfahren nach einem vorstehenden Anspruch, bei dem einer Netzabschlußeinrichtung (RNT) Informationen über freie Ressourcen von funkbasierten Netzeinrichtungen (RBS) über Broadcast, insbesondere einen Nachrichtenkanal, mitgeteilt werden.

13. Verfahren nach einem vorstehenden Anspruch, bei dem eine Netzabschlußeinrichtung (RNT) Informationen über freie Ressourcen in funkbasierten Netzeinrichtungen (RBS) bei Bedarf über einen Dialog, insbesondere einen von der Netzabschlußeinrichtung (RNT) initiieren Dialog, von den funkbasierten Netzeinrichtungen (RBS) abfragt.

14. Verfahren nach einem vorstehenden Anspruch, bei dem einer Netzabschlußeinrichtung (RNT) Informationen über freie Ressourcen in funkbasierten Netzeinrichtungen (RBS) bei jedem Verbindungsaufbau und/oder bei Änderungen im Ressourcenverbrauch in funkbasierten Netzeinrichtungen (RBS) signalisiert werden.

15. Verfahren nach einem vorstehenden Anspruch, bei dem in einer Netzabschlußeinrichtung (RNT) und/oder in einer Steuereinrichtung des Datenübertragungs-Systems die Entscheidung bezüglich der Weitergabe einer Funkverbindung anhand der Parameter getroffen wird.

16. Verfahren nach einem vorstehenden Anspruch, bei dem die Funkschnittstelle (V) gemäß dem Bluetooth-Standard, dem DECT-Standard, dem HomeRF-Standard, dem IEEE 802.11-Standard, dem IEEE 802.11b-Standard, dem IEEE 802.11a-Standard, dem HiperLAN-Standard, dem HiperLAN2-Standard, dem GSM-Standard oder dem UMTS-Standard verwaltet wird.

17. Verfahren nach einem vorstehenden Anspruch, bei dem Datenpakete über die Funkschnittstelle (V) mittels Internet-Protokoll-Paketen (IP) übertragen werden.

18. Verfahren nach einem vorstehenden Anspruch, bei dem die QoS-Parameter aus DiffServ-Priorisierungen abgeleitet werden.

19. Verfahren nach einem vorstehenden Anspruch, bei dem die QoS-Parameter aus den Kopf-Daten sowie einer Nutzinformation transportierter Datenpakete bestimmt werden.

20. Verfahren nach einem vorstehenden Anspruch, bei dem eine der funkbasierten Netzabschlußeinrichtungen eine oder mehrere gleichzeitige Funkverbindungen zu einer oder mehreren Radio-Basisstationen unterhält.

21. Verfahren nach einem vorstehenden Anspruch, bei dem die QoS-Parameter, insbesondere die Frei-Konstante (QoS-RBS1-Free, QoS-RBS2-Free), zur Entscheidung über den Aufbau einer oder mehrerer Funkverbindungen zwischen einer funkbasierten Netzabschlußeinrichtung und einer oder mehreren Radio-Basisstationen herangezogen werden.

22. Datenübertragungs-System, mit
- zumindest einer funkbasierten Netzzugangseinrichtung (RBS; RBS1, RBS2),
- zumindest einer Teilnehmereinrichtung (RNT; RNT1, RNT2, RNT3) zum teilnehmerseitigen Anschluß von Datenendgeräten (H, W-H), die über eine Schnittstelle (V) miteinander kommunizieren, wobei die Schnittstelle (V) ein gemeinsam genutztes Medium darstellt,
- einer Empfangseinrichtung in jedem einer Vielzahl der Datenendgeräte (H, W-H) zum Empfangen jedes Datenpakets, das über die Schnittstelle (V) von der zumindest einen Netzzugangseinrichtung (RBS) gesendet wird, und
- zumindest einer Verwaltungseinrichtung in einer Datenübertragungs-Systemeinrichtung zur Verwaltung von Datenverbindungen mit individuellen Qualitätsanforderungen (QoS) zwischen Netzeinrichtungen (RBS, RNT; RBS1, RBS2, RNT1, RNT2, RNT3) unter Berücksichtigung entsprechender Qualitätsanforderungen,
**dadurch gekennzeichnet, dass**
- die zumindest eine Verwaltungseinrichtung zum Bestimmen von Ressourcenbestandsanforderungen und/oder Ressourcenverbrauch und/oder freie Ressourcen des Datenstroms über die Schnittstelle (V) zwischen zumindest einer der Teilnehmerendeinrichtungen (RNT; RNT1, RNT2, RNT3) und der damit kommunizierenden Netzzugangseinrichtung (RBS; RBS1, RBS2) für zumindest eine von diesen durch einen oder mehrere Parameter ausgebildet ist.

23. Datenübertragungs-System nach Anspruch 22, bei dem das Datennetz ein PSTN/ISDN-Telekommunikationsnetz, ein Breitband-Telekommunikationsnetz (xDSL), ein Mobilfunknetz, ein lokales Datennetz (LAN) oder ein Kabel-Fernsehnetz ist.

24. Datenübertragungs-System nach Anspruch 22 oder 23, das als ein drahtloses Teilnehmeranschlußsystem (WLL) ausgebildet ist.
